# DEMANDE DE BREVET EUROPEEN

(11) **EP 1 845 065 A2**
(43) Date de publication de la demande: **17.10.2007**
(21) Numéro de dépôt: 07111187.6
(22) Date de dépôt: 14.04.1999
(51) Int. Cl.: C01G 45/00, C01G 31/00, C01G 51/00, C01G 53/00, C01G 23/053, H01M 4/48, H01M 4/50, H01M 4/52

(54) **Oxyde de métal de transition lithie ou surlithie, matériau actif d'électrode positive comprenant cet oxyde, et accumulateur**

(30) Priorité: 14.04.1998 FR 9804626
(62) Demande divisionnaire de: 99915800.9
(71) Demandeur: COMMISSARIAT A L'ENERGIE ATOMIQUE, 75015 Paris (FR)
(72) Inventeur: Bourbon, Carole, 38500, La Buisse (FR); Le Cras, Frédéric, 38080, L'Isle d'Abeau (FR); Rouppert, Franck, 38870, Saint Pierre de Bressieux (FR); Bloch, Didier, 38330, Biviers (FR)
(74) Mandataire: Poulin, Gérard

(57) **Abrégé**

La présente invention a trait à un oxyde de métal de transition lithié ou surlithié susceptible d'être obtenu par un procédé comprenant les trois étapes suivantes, réalisées successivement ou de manière simultanée :
- préparation d'une solution d'alkoxyde de lithium par dissolution de lithium métallique dans l'alcool correspondant, ledit alcool étant choisi parmi les alcools issus des alcanes linéaires ou ramifiés comprenant au moins 3 atomes de carbone, les alcools issus des hydrocarbures aliphatiques insaturés, et leurs mélanges ;
- addition d'une poudre d'oxyde de métal de transition à ladite solution d'alkoxyde de lithium pour obtenir une dispersion ;
- réduction ménagée dudit oxyde de métal de transition par ledit alkoxyde de lithium jusqu'à obtention d'un oxyde de métal de transition lithié ou surlithié présentant une stoechiométrie définie Li _{:} Métal ;

ledit procédé comprenant ensuite, en outre, les étapes suivantes :
- évaporation de l'alcool résidue- ;
- rinçage de la poudre ainsi obtenue ;
- séchage de la poudre.

Utilisation de cet oxyde en tant que matériau actif d'électrode.

Electrode notamment électrode positive comprenant cet oxyde en tant que matériau actif et accumulateur comprenant cette électrode.

## Description

La présente invention a trait à un oxyde de métal de transition lithié ou surlithié, cet oxyde lithié ou surlithié pouvant être avec profit utilisé comme matériau actif d'électrode et plus particulièrement d'électrode positive.

L'invention a également trait à l'électrode en particulier à l'électrode positive comprenant ce matériau.

L'invention concerne enfin les accumulateurs au lithium à électrode négative métallique ou composite mettant en oeuvre ladite électrode positive.

Le domaine technique de l'invention peut généralement être considéré comme celui des accumulateurs au lithium rechargeables (en anglais « Secondary Lithium Cell » ou « Secondary Lithium Battery »)

Un aperçu historique de la mise au point des accumulateurs rechargeables au lithium est donné dans le document de K. BRANDT « Historical Development of Secondary Lithium Batteries », Solid State Ionics 69 (1994), 173-183.

Le principe de fonctionnement de toutes les filières d'accumulateurs au lithium est le même: à chaque charge ou décharge de l'accumulateur, du lithium sous forme ionique (Li⁺) est échangé entre les électrodes positive et négative. La quantité d'énergie échangée (fournie par l'accumulateur en décharge ou fournie à l'accumulateur en charge) à chaque charge ou décharge est exactement proportionnelle à la quantité de lithium qu'il est possible d'échanger au cours de la réaction électrochimique.

Ce lithium "échangeable" doit être fourni par une "source" de lithium. Cette source est l'électrode négative dans le cas des filières mettant en oeuvre une électrode négative en lithium métallique. Pour les filières mettant en oeuvre une électrode négative à base de carbone, qui ne contient en principe pas de lithium par construction, la source de lithium doit donc être contenue dans l'électrode positive. C'est dans ce cas le matériau actif d'électrode positive qui joue ce rôle de source de lithium. On voit qu'il devient nécessaire d'incorporer dans la structure de ce matériau actif d'électrode positive au cours de sa synthèse la plus grande quantité de lithium possible afin de disposer d'une réserve de lithium suffisante pour disposer de performances électrochimiques intéressantes.

Un accumulateur se caractérise par sa tension de fonctionnement, qui est déterminée par la différence de potentiel entre l'électrode négative et l'électrode positive. Le potentiel absolu (non mesurable) de l'électrode négative en lithium métallique est constant, car c'est un métal pur.

La tension d'un accumulateur à électrode négative de lithium métallique est donc entièrement déterminée par le potentiel de l'électrode positive, qui dépend de la structure cristallographique du matériau actif d'électrode positive, et qui évolue en fonction de la quantité de lithium contenue dans celui-ci. Au cours d'une décharge de l'accumulateur, le lithium s'insère dans la structure cristalline de ce matériau actif dont le potentiel chute régulièrement. La tension de l'accumulateur baisse. C'est l'inverse au cours d'une charge.

Les matériaux actifs présentent tous une évolution différente de leur potentiel (vs Li/Li+) en fonction de la quantité de lithium qu'ils contiennent : chaque matériau actif a ainsi une « signature électrochimique » caractéristique. Certains insèrent le lithium entre 3,5 et 4,5 Volts, c'est par exemple le cas des oxydes de cobalt dont le potentiel (vs Li/Li+) varie entre 3,5 V (pour LiCoO₂) et 4,5 Volts (pour Li₁₋ₓCoO₂, avec x≈0,7 à l'issue d'une charge de l'accumulateur).

Comme autre exemple, le potentiel (vs Li/Li+) des oxydes de manganèse de composition voisine de Li_{0,3}MnO₂ utilisés par TADIRAN Batteries Ltd pour les accumulateurs élaborés suivant la technologie décrite dans le brevet US-A-5 506 068 insèrent le lithium entre 3,4 Volts (la composition du matériau actif d'électrode positive est alors voisine de Li_{0,3}MnO₂ ) et 2 Volts (la composition du matériau actif d'électrode positive est alors voisine de LiMnO₂). C'est la filière « Lithium-métal, 3 Volts, à électrolyte liquide».

D'autres matériaux à base d'oxydes de manganèse sont plus versatiles : c'est ainsi que les oxydes de manganèse de structure spinelle présentent habituellement deux « plateaux » de potentiel de fonctionnement. Par exemple pour le composé de structure spinelle de formule LiMn₂O₄, la majeure partie du lithium est extraite de cette structure entre environ 3,2 Volts et 4,4 Volts (vs Li/Li⁺) (la composition du matériau actif d'électrode positive à l'issue de la charge jusqu'à 4,4 Volts est alors voisine de Mn₂O₄), tandis qu'il est possible d'insérer du lithium entre environ 3,2 Volts et 1,8 Volts dans la structure LiMn₂O₄ (la composition du matériau actif d'électrode positive à l'issue de la décharge jusqu'à 1,8 Volts de l'accumulateur est alors voisine de Li₂Mn₂O₄).

On voit donc qu'il est possible et même nécessaire de choisir le composé actif de l'électrode positive afin d'optimiser les performances globales du système.

Les accumulateurs au lithium peuvent être classées en diverses catégories ou filières, la première de ces filières est la filière lithium métallique « 3 volts » à électrolyte liquide.

Chronologiquement, les premiers accumulateurs au lithium développés il y a une vingtaine d'années utilisaient une électrode négative en lithium métallique.

Bien qu'offrant des densités d'énergie élevées grâce à l'importante réserve de lithium contenu dans l'électrode négative, cette filière a été abandonnée par la plupart des constructeurs de batteries du fait de la mauvaise reconstitution de la surface métallique à l'interface électrode négative/électrolyte au cours des cycles de charge et de décharge, conduisant à des durées de vie trop faibles (~ 200 cycles). L'expérience montrait en effet qu'au cours des cycles successifs charge/décharge, des phénomènes de croissance dendritique (sous forme d'aiguilles) apparaissaient lors de la reconstitution du lithium métal. Ces aiguilles finissaient au bout de 200 cycles environ par remplir l'espace entre l'électrode négative et la électrode positive, ce qui provoquait des court circuits internes.

Toutefois, certains fabricants d'accumulateurs ont réussi à limiter ce phénomène. Par exemple, le document de E. MENGERITSKY, P. DAN, I. WEISSMAN, A. ZABAN ; D. AURBACH, « Safety and Performances of TADIRAN TLR-7103 Rechargeable Batteries », J. Electrochem. Soc, vol. 143, n°7, July 1996 décrit un accumulateur fonctionnant entre 2 et 3,4 volts à électrode négative de lithium métallique et à électrolyte liquide présentant une durée de vie intéressante, mais néanmoins limitée à environ 500 cycles charge/décharge, grâce à une nouvelle formulation d'électrolyte.

Une amélioration supplémentaire pourrait découler de l'utilisation d'un matériau d'électrode positive contenant une plus grande quantité de lithium.

Une filière différente dite filière « lithium-ion » 4 volts a été proposée au début des années 1980 afin de surmonter la difficulté que constituait la croissance dendritique.

Elle consiste à substituer à l'électrode négative en lithium métallique un composé d'insertion du lithium à base de carbone.

Dans ce cas, l'électrode négative de lithium métallique est remplacée par une électrode contenant un composé d'insertion du lithium à base de carbone dans lequel le lithium s'intercale réversiblement au cours des cycles successifs, exactement comme il le fait dans le composé d'insertion de l'électrode positive. C'est la filière « Lithium-ION, 4 Volts »

Cependant, du fait de ce choix,
- l'électrode négative n'est plus capable de faire office de réservoir de lithium nécessaire à la réaction électrochimique, ce qui rend obligatoire l'utilisation d'un composé d'électrode positive contenant par construction du lithium.
- une partie du lithium issu de l'électrode positive est consommée irréversiblement par l'électrode négative en carbone lors de la première charge de l'accumulateur (correspondant à la première insertion du lithium dans l'électrode négative carbonée), ce qui entraîne une perte équivalente de capacité de l'accumulateur.

Ces limitations impliquent qu'il est utile de pouvoir synthétiser un matériau actif d'électrode positive contenant le plus de lithium possible.

A titre d'exemple, les composés à base d'oxyde de manganèse présentant jusqu'à aujourd'hui les meilleures caractéristiques électrochimiques dans le cadre de la filière « Lithium-ION, 4 Volts » décrite plus haut sont des produits de structure spinelle de composition voisine de LiMn₂O₄. Ils permettent le cyclage électrochimique entre 3,2 et 4,4 Volts (vs Li/Li⁺).

On voit que dans ce cas, une partie du lithium contenu dans LiMn₂O₄ est consommé irréversiblement au cours de la première charge par l'électrode négative. On voit l'utilité d'incorporer une quantité supplémentaire de lithium par construction dans la structure spinelle du composé LiMn₂O₄, de façon à pouvoir disposer d'une réserve de lithium supplémentaire.

Or, jusqu'à présent, et malgré de nombreuses tentatives dans le monde, comme cela est décrit par exemple dans le document de TARASCON J.M., GUYOMARD D., J. Electrochem.Soc, vol 138, n°10, 2804-2868, 1991, il ne s'est pas révélé possible de synthétiser par un procédé économique et facilement industrialisable un composé de structure spinelle de formulation Li₁₊ₓMn₂O₄, avec 0<x≤1.

C'est pourquoi l'utilisation des matériaux à base d'oxyde de manganèse comme matériaux actifs d'électrode positive d'accumulateurs de la filière « Lithium-ION, 4 Volts » a été considérablement limitée.

Ceci explique également que les composés retenus pour cette filière « Li-ION, 4 Volts » furent essentiellement des oxydes mixtes de lithium et de cobalt (LiCoO₂) ou de nickel (LiNiO₂).

Ces composés présentent en effet à la fois l'intérêt de pouvoir être synthétisés simplement par traitement thermique de précurseurs appropriés et de maintenir une densité d'énergie acceptable, supérieure à 100 Wh/kg. En effet, dans ce cas la quantité relativement faible de lithium stockée dans l'électrode positive (proportionnelle à la capacité I.t) est compensée par la tension de fonctionnement U élevée voisine de 4 Volts (Energie = U.I.t).

Depuis la fin des années 80, la plupart des fabricants d'accumulateurs développent cette filière « Li-ION, 4 Volts » (four Volts Lithium Ion Cell ou 4-Volts Li-ION en anglais) qui associe un composé d'électrode positive de type oxyde de cobalt LiCoO₂ ou de nickel LiNiO₂ fonctionnant entre 3,5 et 4,5 Volts (vs Li/Li⁺) et des matériaux d'électrode négatives carbonés spécifiques limitant la perte de capacité au 1^{er} cycle, ces développements sont décrits dans le document de K. BRANDT déjà cité plus haut.

Ces systèmes atteignent désormais des densités d'énergie voisines de 110 à 120 Wh/kg, correspondant à une autonomie de 170 à 200 km pour un véhicule électrique, et ont une durée de vie voisine de 800 cycles.

Les inconvénients de ce type d'accumulateur sont le coût élevé des oxydes de cobalt et de nickel, et leur densité d'énergie qui demeure malgré tout relativement faible (comparée aux filières à électrode négative de lithium métallique).

Il apparaît donc dans tous les cas de figure (filières à électrode négative de lithium métallique ou à base de carbone) que l'utilisation d'un composé actif d'électrode positive fortement lithié constitue un facteur d'amélioration significatif des performances de l'accumulateur.

L'existence d'oxydes de métaux de transition fortement lithiés a été démontrée car dans les accumulateurs en décharge, l'insertion électrochimique de l'ion lithium dans le matériau d'électrode positive donne naturellement naissance à ce type de composés.

La recherche de procédés de synthèse « artificiels » a déjà exploré plusieurs voies.

La première de ces voies est la synthèse en phase solide mettant en oeuvre la réaction à différentes températures entre sels ou poudres d'oxydes de métaux de transition et de sels de lithium, et n'a jamais permis d'obtenir des produits de stoechiométrie et de structure souhaitées.

La deuxième de ces voies est la synthèse par réaction à l'aide d'un réducteur en solution. Ce réducteur peut être par exemple le n-butyl lithium ou l'iodure de lithium.

La réduction par le n-butyl lithium a été décrite par David W.I.F, Thackeray M.M, Picciotto L.A , Goodenough J.B, J. Of Solid State Chemistry, 67, 316-323, 1987.

Dans ce cas, la réaction de lithiation des oxydes de manganèse par le n-butyl lithium est très lente. Elle s'étend en effet sur plusieurs jours et met en oeuvre un réactif, à savoir le n-butyl lithium qui est très coûteux et dangereux car instable à l'air.

La stoechiométrie des composés obtenus est difficile à maîtriser. Il est obligatoire d'utiliser une quantité de n-butyl lithium proche de la stoechiométrie recherchée. Un excès de ce réactif aboutit à une réduction excessive de l'oxyde de métal de transition. Il n'est donc pas possible d'accélérer de cette façon la réaction.

Les composés obtenus présentent une structure cristallographique sensiblement identique à celle des composés formés lors de l'insertion du lithium dans le composé d'électrode positive lors de la décharge d'un accumulateur, mais ils ne sont pas stables à l'air.

La réduction par l'iodure de lithium a été décrite par Tarascon J.M, Guyomard D., J. Of Electrochem. Soc, vol. 138, n°10, 2864-2868, 1991.

La réaction de lithiation des oxydes de manganèse par l'iodure de lithium est également assez lente, puisqu'elle dure environ 24 heures, et elle nécessite un bon contrôle de la stoechiométrie des réactifs. La réaction permet toutefois d'aboutir à des composés stables à l'air présentant la structure cristallographique recherchée, c'est à dire similaire à celle obtenue dans un accumulateur en décharge. En outre, l'iodure de lithium est très coûteux.

Le document US-A-5 549 880 décrit l'élaboration d'oxydes de vanadium lithiés à partir d'un alkoxyde de lithium préparé par réaction de lithine et d'un alcool léger tel que l'éthanol ou le méthanol. Le produit final lithié est alors difficile voire impossible à obtenir car il se délithie très rapidement. L'utilisation d'alcools plus lourds conduit à une cinétique extrêmement lente.

Il existe donc un besoin pour un procédé de préparation d'oxyde de métal de transition « lithié ou surlithié » qui ne présente pas les inconvénients, limitations, et désavantages des procédés de l'art antérieur, en particulier en ce qui concerne la cinétique et le coût.

Le but de l'invention est de fournir un procédé de préparation d'oxydes de métal de transition « lithiés ou surlithiés » qui réponde entre autres à ces besoins, et qui surmonte les problèmes posés par les procédés de l'art antérieur.

Ce but, et d'autres encore, sont atteints conformément à l'invention par un procédé de préparation d'oxyde de métal de transition « lithié ou surlithié » comprenant les trois étapes suivantes, réalisées simultanément ou de manière simultanée :
- Préparation d'une solution d'alkoxyde (alcoolate) de lithium par dissolution de lithium métallique dans l'alcool correspondant, ledit alcool étant choisi parmi les alcools issus des alcanes linéaires ou ramifiés comprenant au moins 3 atomes de carbone, les alcools issus des hydrocarbures aliphatiques insaturés, et leurs mélanges ;
- Addition d'une poudre d'oxyde de métal de transition à ladite solution d'alkoxyde de lithium pour obtenir une dispersion ;
- Réduction ménagée dudit oxyde de métal de transition par ledit alkoxyde jusqu'à obtention d'un oxyde de métal de transition « lithié ou surlithié » présentant une stoechiométrie définie (voulue) Li : Métal, cette stoechiométrie est dépendante de la composition et de la structure de l'oxyde de métal de transition initial ;
   ledit procédé comprenant ensuite, en outre, les étapes suivantes :

- Evaporation de l'alcool résiduel
- Rinçage de la poudre ainsi obtenue
- Séchage de la poudre.

Par « surlithiation », on entend l'insertion de lithium dans la structure d'un oxyde de métal de transition commercial, préalablement à son incorporation dans l'électrode positive ; le composé « surlithié » ainsi formé présentant des caractéristiques similaires (chimiques, cristallographiques, électrochimiques) à celles du produit obtenu par l'insertion du lithium dans l'oxyde commercial initial tel qu'il est généré au cours d'une décharge infiniment lente de l'accumulateur jusqu'à une tension comprise entre la tension d'abandon de cet oxyde initial (vs Li/Li⁺), et 1,0 volt (vs Li/Li⁺).

Par lithiation, ou produit lithié, on entend toute étape intermédiaire entre le produit initial et la surlithiation correspondant au produit surlithié défini ci-dessus.

Le procédé selon l'invention se différencie fondamentalement des procédés de l'art antérieur pour la préparation d'oxydes de métal de transition « lithiés ou surlithiés » en ce qu'il utilise en tant qu'intermédiaire réactionnel des alkoxydes de lithium qui sont selon une caractéristique essentielle de l'invention obtenus par dissolution de lithium métallique dans l'alcool correspondant, ce dernier étant un alcool issu d'un alcane linéaire ou ramifié ayant au moins 3 atomes de carbone ou un alcool issu d'un hydrocarbure aliphatique insaturé. Il est bien entendu que l'on peut utiliser un mélange quelconque de ces alcools en toutes proportions.

L'utilisation d'alkoxydes de lithium dans l'élaboration de composés d'électrodes positives pour accumulateurs au lithium a certes déjà été mentionnée, mais uniquement pour l'élaboration d'oxydes de vanadium lithiés. (Brevet US-A-5 549 880).

Cependant, le procédé mis en oeuvre dans ce document utilise de la lithine LiOH et un alcool comme précurseurs de préparation de l'alkoxyde, si bien que du fait des constantes d'équilibre chimique entre LiOH et les alcools, la solution obtenue ne peut contenir des quantités appréciables d'alkoxyde que si l'alcool retenu est un alcool léger (essentiellement méthanol ou éthanol).

Ce document dissuade d'utiliser des alcools plus lourds et conseille expressément de mettre en oeuvre du méthanol ou de l'éthanol comme c'est le cas dans l'exemple unique de ce document.

L'utilisation d'un alcool plus lourd comme en particulier le pentanol-1, dans les conditions du procédé de ce document où l'on part de lithine, ne conduit qu'à la formation d'alkoxyde en très faible concentration dans la solution, et donc à des cinétiques de réaction très faibles.

Or, le procédé qui fait l'objet de la présente demande met en évidence la nécessité de disposer d'un alkoxyde provenant de la réaction entre du lithium et un alcool issu d'un alcane linéaire ou ramifié contenant au moins 3 atomes de carbone ou un alcool issu d'un hydrocarbure aliphatique insaturé.

De manière générale, il a été mis en évidence que les oxydes de métaux de transition lithiés ou surlithiés se délithie dans l'éthanol, ainsi, à titre d'exemple, nous avons pu montrer qu'un spinelle LiMn₂O₄ lithié par le procédé selon l'invention dans du pentanol-1 se délithie rapidement lors de son séjour dans de l'éthanol absolu.

Ceci confirme la prédominance de la stabilité de l'éthoxyde de lithium par rapport aux oxydes de métaux de transition lithiés ou surlithiés par notre procédé, et donc par la réciproque l'impossibilité d'obtenir ces mêmes composés lithiés ou surlithiés en dispersion dans une solution d'alcool léger tels que l'éthanol ou le méthanol.

La préparation de l'alkoxyde à partir de lithium métallique selon la première étape du procédé selon l'invention permet, de manière surprenante d'obtenir des solutions concentrés d'alkoxyde de lithium même avec des alcools comprenant 3 atomes de carbone et plus au contraire du document US-A-5 549 880.

De ce fait, la cinétique de la lithiation de l'oxyde de métal de transition est plus rapide, voire même instantanée, et le rendement est voisin de 1 grâce au caractère plus réducteur des alkoxydes lourds (issus d'alcools dérivés d'alcanes linéaires ou ramifiés ayant au minimum trois atomes de carbone ou d'alcools dérivés d'hydrocarbures aliphatiques insaturés) par rapport aux alkoxydes légers.

Le procédé selon l'invention se situe dans un domaine différent qui est celui d'une chimie dite « douce » réalisée en solution et à faible température.

Le procédé selon l'invention apporte une solution aux problèmes posés par les procédés de l'art antérieur.

En effet, il ne fait appel qu'à des réactifs usuels, peu coûteux, facilement disponibles et qui ne présentent pas de risques particuliers.

Le procédé de l'invention, au contraire des procédés de l'art antérieur présente en outre une cinétique rapide et ne comporte que peu d'étapes intermédiaires puisque l'étape essentielle du procédé est la réduction ménagée de l'oxyde de métal de transition.

Le procédé selon l'invention est suffisamment « doux » et précis pour ne pas s'écarter de la stoechiométrie souhaitée.

La réaction s'arrête en effet à une stoechiométrie Li : métal parfaitement définie par le choix de l'alcool, même en présence d'un large excès d'alkoxyde, et qui est fonction de la composition et de la structure cristallographique de l'oxyde de métal de transition initial.

Par stoechiométrie parfaitement définie, on entend généralement un rapport Li : Métal supérieur ou égal à 0,5 ; de préférence de 0,5 à 2.

Le procédé selon l'invention a également l'avantage d'être significativement moins coûteux que les deux autres premiers procédés de l'art antérieur décrits plus haut.

Ainsi il a pu être estimé en se basant sur les coûts évalués par comparaison des prix d'une mole de réactif de lithiation (mole de lithium), que le procédé de l'invention avait un coût divisé par environ 18 par rapport au procédé utilisant l'iodure de lithium et un temps de réaction divisé par 20, et un coût divisé par 3 par rapport au procédé utilisant le n-butyl lithium et un temps de réaction divisé par au moins 100.

Le procédé selon l'invention présente l'avantage de pouvoir être réalisé à basse température ; par basse ou faible température, on entend généralement que les différentes étapes sont soit réalisées à température ambiante - généralement voisine de 20°C - comme c'est le cas de la préparation de la solution d'alkoxyde de lithium, de l'addition de la poudre d'oxyde métallique à la solution d'alkoxyde de lithium ou encore du rinçage de la poudre obtenue, soit à une température basse ou faible comme c'est le cas de la réduction ménagée qui est généralement réalisée à une température de 50 ou 70 à 260°C qui correspond sensiblement à la température d'ébullition de l'alcool mis en oeuvre (porté au reflux), ou du séchage généralement réalisé à une température de 80 à 150°C.

Bien entendu, ces gammes de température peuvent être abaissées jusqu'à la température ambiante ou plus bas, si au lieu de travailler à la pression atmosphérique on opère sous pression réduite.

La mise en oeuvre de températures basses ou faible favorise l'obtention d'un composé réversible électrochimiquement et de stoechiométrie Li : Métal parfaitement définie.

L'invention sera mieux comprise à la lecture de la description qui va suivre donnée à titre illustratif et non limitatif en référence aux dessins joints dans lesquels :
- la figure 1 est un diagramme de diffraction des rayons X (ordonnée : Intensité en unité arbitraire, abscisse 2. Théta en degrés, λ = 1,5406 Å) montrant l'évolution de la structure cristallographique d'un composé initial de type spinelle de formule Li_{1,29}Mn_{1,71}O₄ avec Li : Mn = 0,75 (diagramme du bas), après lithiation par le procédé selon l'invention (diagramme du haut) et insertion de 0,56 mole de Li, comme cela est décrit dans l'exemple 1.
- Les figures 2 et 3 représentent respectivement un 1er cycle de charge-décharge et les 7 premiers cycles de charge-décharge pour l'accumulateur de l'exemple 1 en abscisse est indiquée la capacité C en mAh/g et en ordonnée la tension (U) en volts.
- La figure 4 analogue à la figure 1 donne l'évolution du diagramme de diffraction des rayons X (λ = 1,78901 Å) lors de la lithiation observée dans l'exemple 2. Diagramme du bas : composé initial Li_{0,33}MnO_{2,03} (produit "TADIRAN" ) . Diagramme du haut : composé lithié par le procédé de l'invention (Li_{0,33}MnO_{2,03} + 0,70 Li ≈LiMnO₂)
- les figures 5 et 6 représentent respectivement le premier cycle de charge et de décharge et les 3 premiers cycles de charge et de décharge pour l'accumulateur de l'exemple 2 ;
- la figure 7 illustre le comportement de l'accumulateur de l'exemple 3, la tension U en volts étant portée en ordonnée et Δx(Li/Mn) étant porté en abscisse.

De manière plus précise, le procédé de l'invention comprend donc tout d'abord la préparation d'une solution d'alkoxyde de lithium dans l'alcool correspondant.

L'alcool est selon l'invention choisi parmi les alcools dérivés des alcanes linéaires ou ramifiés comprenant au moins 3 atomes de carbone, de préférence de 3 à 10 atomes de carbone, et les alcools dérivés des hydrocarbures aliphatiques non saturés, et leurs mélanges.

Le pentanol-1 est l'isopropanol sont préférés. L'alcool se trouve généralement en excès par rapport au lithium.

La solution d'alkoxyde de lithium est généralement préparée par addition de lithium métal dans l'alcool à température ambiante (généralement 20°C) et sous atmosphère de gaz inerte telle que l'argon ou d'air sec.

La solution d'alkoxyde de lithium ainsi obtenue a généralement une concentration supérieure ou égale à 0,01 mole par litre, de préférence une concentration de 0,1 à 10 moles par litre en alkoxyde de lithium.

On ajoute ensuite une poudre d'oxyde de métal de transition à la solution d'alkoxyde de lithium dans l'alcool correspondant préparée lors de la première étape, en vue d'obtenir une dispersion.

L'alkoxyde de lithium est généralement en léger excès par rapport à l'alcool correspondant.

Ledit oxyde de métal de transition est choisi de préférence parmi les oxydes de métaux de transition, c'est-à-dire parmi les oxydes de V, Mn, Co, Ni, Ti, les oxydes mixtes de ces métaux avec un autre métal choisi par exemple parmi les métaux alcalins et alcalino-terreux.

Par oxyde, on entend également toutes les formes cristallines que peuvent prendre les oxydes cités ci-dessus.

Le procédé selon l'invention est applicable à la lithiation de tout oxyde de manganèse de degré d'oxydation moyen du manganèse supérieur ou égal à +3, à titre d'exemple de ceux-ci on pourra citer le béta-MnO₂ le gamma-MnO₂ le epsilon-MnO₂, les composés de formules voisines de Li_{0,3}MnO₂ (par exemple le produit "TADIRAN" Li_{0,33}MnO_{2,03}), le LiMn₂O₄.

Le béta-MnO₂ et le LiMn₂O₄ donnent tous deux en tant que produit final du Li₂Mn₂O₄.

On peut encore citer les oxydes de manganèse de structure spinelle situés dans le domaine du diagramme de phases Li, Mn, O délimité par les compositions MnO₂, LiMn₂O₄, Li₄Mn₅O₁₂.

Ce procédé est également applicable à tous les autres oxydes de métaux de transition tels que par exemple le V₂O₅ .

L'étape de réduction ménagée est généralement réalisée en chauffant jusqu'au reflux la dispersion obtenue dans l'étape précédente, puis en la maintenant au reflux à pression atmosphérique et à la température de réaction, qui correspond donc sensiblement à la température d'ébullition de l'alcool utilisé. Cette température d'ébullition pouvant bien entendu varier avec la pression de travail.

La réaction est réalisée de préférence sous agitation et sous atmosphère inerte de préférence sous balayage d'argon.

Elle peut cependant également être réalisée sous pression réduite par rapport à la pression atmosphérique, ce qui permet de diminuer la température d'ébullition de l'alcool utilisé, et donc de réaliser la réaction à température plus faible.

Dans le cas où du pentanol-1 est mis en oeuvre en tant qu'alcool, le reflux peut ainsi être réalisé à pression atmosphérique à une température de 139°C sensiblement égale à la température d'ébullition du pentanol-1 à la pression atmosphérique.

Dans ce même cas d'utilisation du pentanol-1 où l'on choisit de travailler sous pression inférieure à la pression atmosphérique, le reflux est alors réalisé à une température inférieure à 139°C, et typiquement à une température comprise entre la température ambiante et 139°C.

Cette diminution de la température de travail permet, au stade industriel :
- de diminuer les coûts de production liés au chauffage de la solution
- de réaliser le traitement de lithiation à plus basse température.

Au cours de cette étape, l'alkoxyde opère une réduction ménagée de l'oxyde de métal de transition jusqu'à obtenir une stoechiométrie Li : Métal définie.

Comme cela a déjà été indiqué ci-dessus, les trois étapes décrites plus haut peuvent être réalisées successivement ou de manière simultanée.

L'étape suivante consiste à évaporer le solvant, c'est à dire l'alcool résiduel; la température à laquelle cette étape est réalisée dépend de l'alcool utilisé et est généralement de 50 ou 70 à 260°C sous pression atmosphérique.

On procède ensuite au rinçage de la poudre obtenue dans un liquide adéquat par exemple dans l'alcool précédemment utilisé comme solvant, l'hexane, le tétrahydrofurane, afin d'éliminer l'excès éventuel d'alkoxyde, puis on sèche la poudre, généralement sous vide partiel, et à une température par exemple de 80 à 150°C, de préférence voisine de 150°C pendant une durée adéquate.

La température du séchage peut être plus élevée à savoir jusqu'à 250°C voire 400°C mais à condition que cela ne provoque pas de modification de la structure du produit.

Le séchage a pour but d'éliminer les impuretés et autres éléments organiques qui peuvent être présents à la surface du produit.

Le procédé selon l'invention peut comprendre en outre une étape supplémentaire de traitement thermique réalisée après le séchage.

Le traitement thermique est réalisé à une température généralement de 150°C à 800°C de préférence de 300 à 600°C de préférence encore de 300 à 500°C et pendant une durée généralement de 30 minutes à 3 heures, de préférence de 1 à 2 heures, généralement sous atmosphère neutre.

Ce traitement thermique, qui ne doit pas être confondu avec le séchage, a pour but essentiellement de modifier éventuellement la structure et/ou le comportement électrochimique du matériau lithié ou surlithié.

Ainsi, la lithiation par le procédé selon l'invention d'un produit brut de composition Li_{0,33}MnO_{2,03} tel que celui utilisé par TADIRAN Batteries conduit à la synthèse d'un produit de composition voisine de LiMnO₂.

Si on fait subir à ce produit un traitement thermique sous atmosphère neutre à 250°C pendant 1 heure , on ne modifie pas sa structure, qui correspond à celle du produit initial TADIRAN ayant subi une décharge électrochimique dans un accumulateur.

Si par contre on fait subir à ce même produit un traitement thermique à une température supérieure, par exemple à 300°C pendant 1 heure, on observe la transformation partielle de la structure initiale en structure spinelle quadratique de type Li₂Mn₂O₄. Ce produit, constitué d'un mélange de phases très désordonnées cristallographiquement, présente la particularité de présenter un comportement électrochimique intéressant entre 1,8 et 4,3 volts.

En effet, ce comportement est intermédiaire entre le comportement électrochimique des produits TADIRAN et celui des structures spinelles de type LiMn₂O₄.

Il est donc possible de moduler à volonté l'importance relative des étapes électrochimiques dues à chacune de ces phases, et de disposer ainsi d'un produit dont la tension en décharge évolue plus régulièrement en fonction de l'insertion du lithium que celle de chacun des produits pris séparément.

On n'observe plus le double plateau caractéristique des structures spinelles mais une diminution continue et régulière de la tension de décharge en fonction du taux d'insertion du lithium.

Il est ainsi possible de synthétiser toute une gamme de nouveaux produits (constitués par des mélanges des deux structures lithiées) présentant des caractéristiques électrochimiques intéressantes.

L'invention a également trait à l'oxyde de métal de transition lithié ou surlithié susceptible d'être obtenu par le procédé décrit ci-dessus.

Un tel oxyde de métal de transition lithié ou surlithié se distingue des composé de l'art antérieur par le fait qu'il est fortement lithié avec une stoechiométrie Li : Métal élevée et parfaitement définie, qu'il est stable et réversible vis-à-vis de l'insertion et de la désinsertion du lithium.

Par stoechiométrie Li : Métal élevée, on entend généralement un rapport Li : Métal supérieur ou égal à 0,5, de préférence de 0,5 à 2.

La stabilité du composé selon l'invention correspond à une formulation stable de celui-ci qui est peu affectée notamment par un séjour prolongé à l'air sec ou ambiant, - par séjour prolongé on entend généralement un séjour d'une durée de 24 à 240 heures - ou par une immersion dans l'eau.

Cette stabilité est définie par la stabilité observée des spectres de diffraction des rayons X et par le caractère invariant du degré d'oxydation du métal de transition tel que le manganèse.

Cette stabilité du produit selon l'invention permet de le conditionner, de le stocker et de le manipuler plus facilement.

L'invention a également trait à l'utilisation de l'oxyde de métal de transition lithié ou surlithié décrit ci-dessus en tant que matériau actif d'électrode, en particulier en tant que matériau actif d'électrode positive.

L'invention concerne en outre une électrode, comprenant en tant que matériau actif avant qu'elle n'ait subi une quelconque opération de charge ou de décharge, l'oxyde de métal de transition lithié ou surlithié tel qu'il est décrit ci-dessus.

De préférence, ladite électrode est une électrode positive.

L'invention est relative enfin à un accumulateur comprenant une telle électrode en particulier à un accumulateur comprenant une électrode positive comprenant avant qu'elle n'ait subi une quelconque opération de charge ou de décharge l'oxyde de métal de transition lithié ou surlithié selon l'invention.

Dans ce dernier type d'accumulateur, l'électrode négative peut être par exemple de manière classique soit une électrode négative composite par exemple à base carbone ou à base d'étain ou encore en SnO₂, soit une électrode négative en lithium métallique ou en alliage de lithium ou toute autre électrode négative adéquate.

L'utilisation dans ces accumulateurs des composés d'électrode positive fortement lithiés (lithiés ou surlithiés) selon l'invention permet de surmonter les problèmes liés à des densités d'énergie et/ou à des durées de vies insuffisantes qui se posaient jusqu'alors dans ces accumulateurs, comme cela a déjà été mentionné plus haut.

Ainsi, dans les accumulateurs utilisant une électrode négative composite, la lithiation ou surlithiation du matériau actif de l'électrode positive selon l'invention compense la perte de capacité due à l'utilisation d'une électrode négative composite en remplacement du lithium métallique.

Autrement dit, l'incorporation préalable (c'est-à-dire avant même que l'électrode n'ait subi une quelconque charge ou décharge) de lithium dans le matériau actif d'électrode positive selon l'invention augmente la quantité totale de lithium disponible et donc la densité d'énergie.

Il est possible d'obtenir un gain de 10% en densité d'énergie et donc en autonomie des accumulateurs à électrode négative composite.

De même, dans les accumulateurs utilisant une électrode négative en lithium métallique, l'accumulateur est assemblé à l'état déchargé, la réserve d'ions lithium est déjà contenue dans le matériau de l'électrode positive selon l'invention et l'accumulateur débute sa vie par une charge, c'est-à-dire par un dépôt de lithium issu du matériau actif d'électrode positive sur l'électrode négative au lieu d'un creusement, c'est-à-dire que l'on évite de creuser l'électrode négative de lithium métallique au cours d'une première décharge, améliorant ainsi au cours du cyclage la qualité de l'interface électrode négativeélectrolyte.

Autrement dit une partie du lithium est consommée au cours de la première charge par l'électrode négative tandis que le reste du lithium est utilisé pour l'échange électrochimique réversible au cours des cycles charge-décharge ultérieurs.

Une évolution plus favorable de la morphologie de l'électrode négative au cours des cycles de charge et de décharge en résulte, ralentissant ainsi la croissance dendritique (ou dépôts en forme d'aiguille). La perte de capacité ou la destruction de l'accumulateur par court-circuit interne est fortement retardée.

On obtient grâce à la mise en oeuvre des électrodes positives selon l'invention dans ce type d'accumulateur une augmentation de 10 à 20% de la densité d'énergie des accumulateurs associée à une durée de vie améliorée.

L'invention trouve son application dans tous les domaines où l'on utilise des accumulateurs au lithium et dans lesquels on pourra mettre à profit les améliorations des performances obtenues grâce à l'invention.

Ces domaines sont par exemple celui des équipements portables : téléphones mobiles, camescopes, ordinateurs et celui des véhicules électriques.

L'invention va maintenant être illustré au moyen des exemples suivants donnés à titre illustratif et non limitatif.

### EXEMPLES

Les exemples suivants montrent la préparation d'un oxyde de métal de transition lithié par le procédé de l'invention et sa mise en oeuvre dans un accumulateur en tant que matériau actif d'électrode positive.

### Exemple 1 : Lithiation d'un composé initial de structure spinelle cubique.

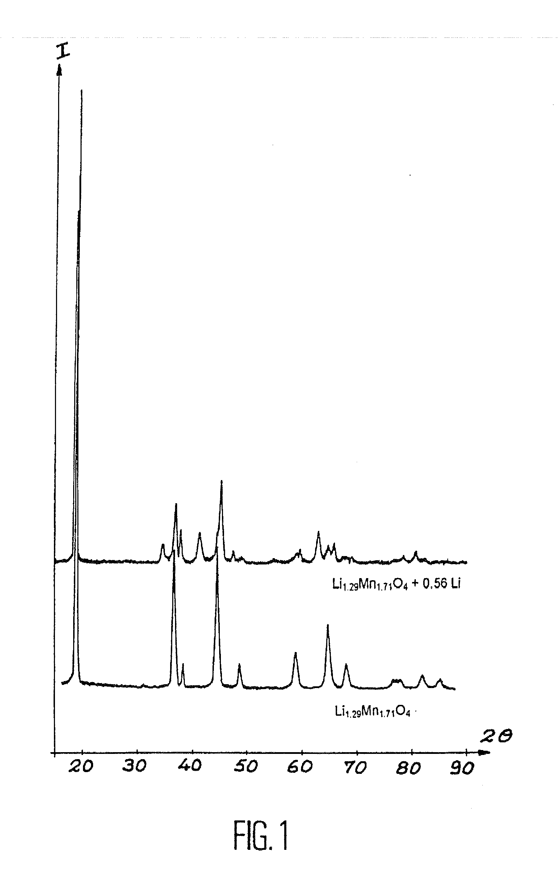

Ce produit initial a une formulation proche de Li_{1,29}Mn_{1,71}O₄ avec un rapport Li : Mn de 0,75 pour un degré d'oxydation moyen du manganèse déterminé par dosage rédox de +3,90, et a un paramètre de maille cubique proche de 8,15 angströms. (le diagramme de diffraction X de ce composé est reproduit figure 1 - diagramme du bas).

Ce produit a été lithié par le procédé de l'invention de la manière suivante : 600 ml de pentanol-1 (pureté > 99%) sont introduits dans un ballon à trois cols de contenance 1000 ml. Dans ce ballon équipé d'un condenseur et dont l'intérieur est isolé de l'atmosphère ambiante, on fait buller pendant une heure et à une température voisine de 20°C de l'argon dans l'alcool soumis à une légère agitation.

3,36 g (soit 0,48 moles) de lithium métallique sous forme de copeaux sont introduits dans l'alcool. La dissolution complète du lithium dans le pentanol-1 et donc la formation de l'alkoxyde correspondant est réalisée au bout de deux heures à température ambiante.

34,8 g d'oxyde de manganèse de type spinelle (soit environ 0,4 mole de manganèse), préalablement séché sous vide primaire à 120°C pendant une heure, sont alors introduits dans la solution d'alkoxyde de lithium à température ambiante.

La dispersion ainsi obtenue est chauffée à pression atmosphérique au reflux à 139°C soit la température d'ébullition du pentanol, et est maintenue à cette température six heures.

Cette dispersion peut être de la même façon chauffée au reflux à une température inférieure, comprise entre la température ambiante et 139°C, si l'on travaille à pression inférieure à la pression atmosphérique.

La dispersion une fois refroidie à une température proche de l'ambiante, est filtrée à l'air ambiant sur verre fritté.

L'oxyde lithié subit alors un rinçage à l'hexane, puis est séché sous vide primaire à 300°C pendant une heure.

Le produit lithié final contient alors du manganèse à degré d'oxydation moyen voisin de +3 traduisant l'insertion d'environ 0,6 mole de lithium par mole de manganèse avec un rapport Li : Mn de 1,08.

La structure cristallographique du composé lithié déterminée par diffraction des rayons X est celle d'un spinelle déformé de paramètres de maille quadratique a = b = 5.691 Å et c = 8.768 Å (c/ (√2·a) = 1.09) (figure 1 - diagramme du haut). Celle-ci est similaire à celle observée sur les composés du type de l'oxyde initial ayant subi une intercalation électrochimique du lithium dans un accumulateur.

Une électrode positive de diamètre 8 mm et d'épaisseur voisine de 300 microns intégrant le composé lithié préparé ci-dessus est obtenue en pressant à 10 tonnes un mélange intime composé de 55% en masse d'oxyde lithié, 30% en masse de noir de carbone et 15% en masse de graphite.

Un accumulateur ou cellule électrochimique à électrode de lithium métallique est réalisé dans un montage classique de type Swagelock®. L'électrolyte utilisé est une solution molaire de perchlorate de lithium dans un mélange équimolaire de carbonate d'éthylène et de carbonate de diméthyle.

Le séparateur utilisé entre l'électrode négative et l'électrode positive est un film microporeux en polypropylène de type Celgard®.

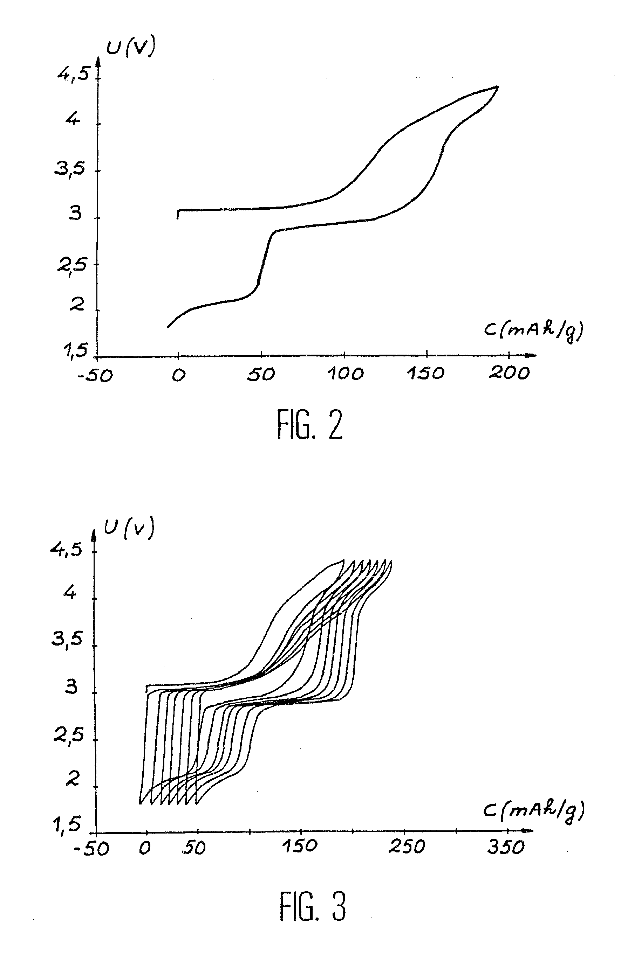

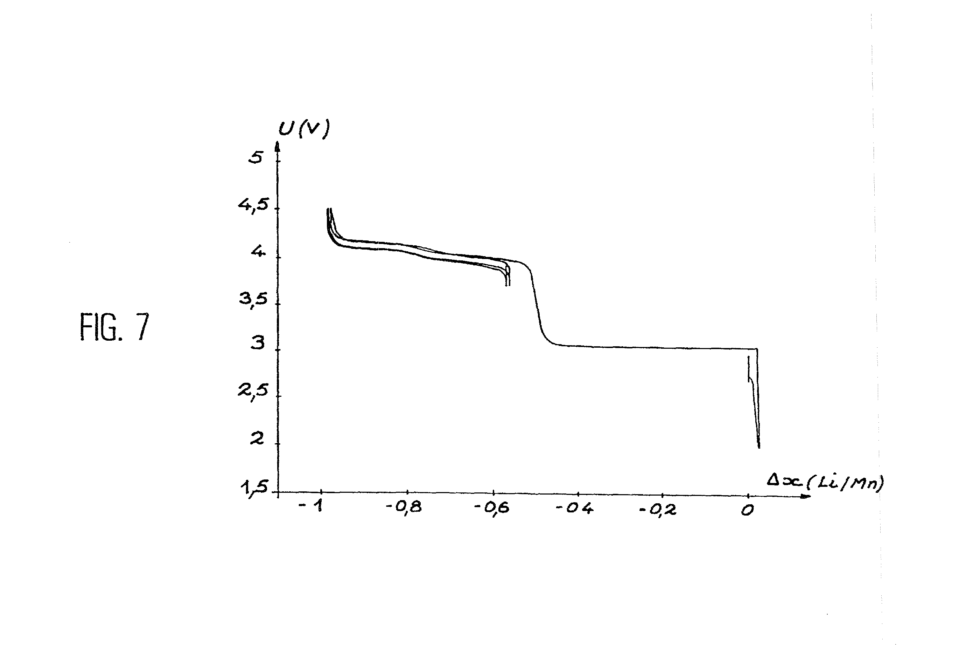

Le comportement d'un tel accumulateur contenant 10,8 mg de produit prélithié dans l'électrode positive, chargé et déchargé sous 0,150 mA est montré par les figures 2 et 3 (premier cycle charge-décharge - figure 2 ; 7 premiers cycles indiqués figure 3).

Exemple 2 : Lithiation du composé initial de formulation proche de Li_{0,3}MnO₂ (Li_{0,33}MnO_{2,03}) pour un degré d'oxydation moyen du manganèse déterminé par dosage de +3,71, produit et utilisé par TADIRAN Batteries Ltd dans leur technologie d'accumulateurs 3V à électrode négative en lithium métallique.

Le mode opératoire est le même que celui décrit dans l'exemple n°1, à la différence que le temps de séchage à 250°C est limité à 1 heure.

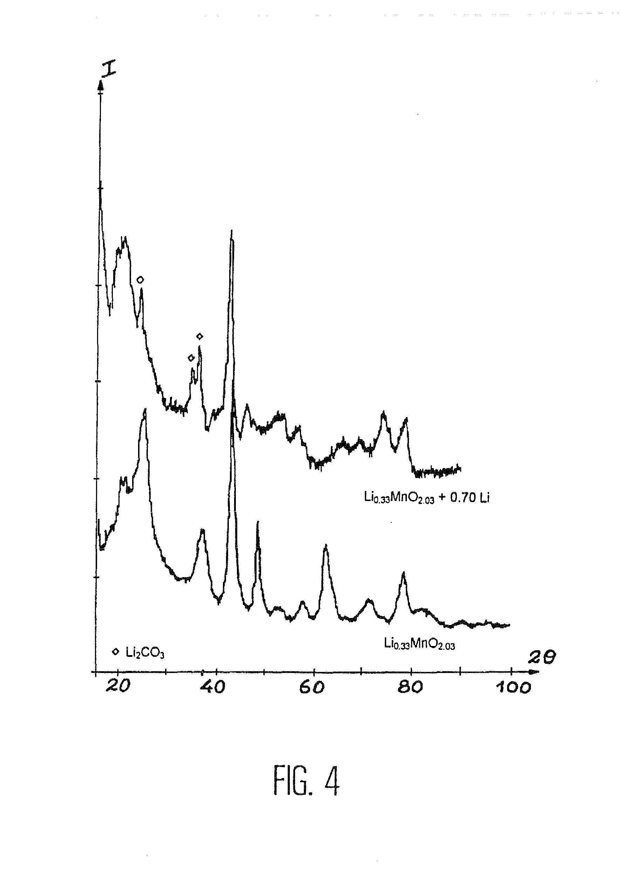

Le composé lithié ainsi obtenu contient alors du manganèse à degré d'oxydation moyen +3,05 ce qui traduit l'insertion de 3,71 - 3,05 = 0,66 mole de lithium par mole de manganèse dans l'oxyde initial soit une composition finale pour le composé lithié voisine de Li₁MnO₂. L'évolution du diagramme de diffraction RX (λ= 1,78901 Å) due à la lithiation est montré à la figure 4) .

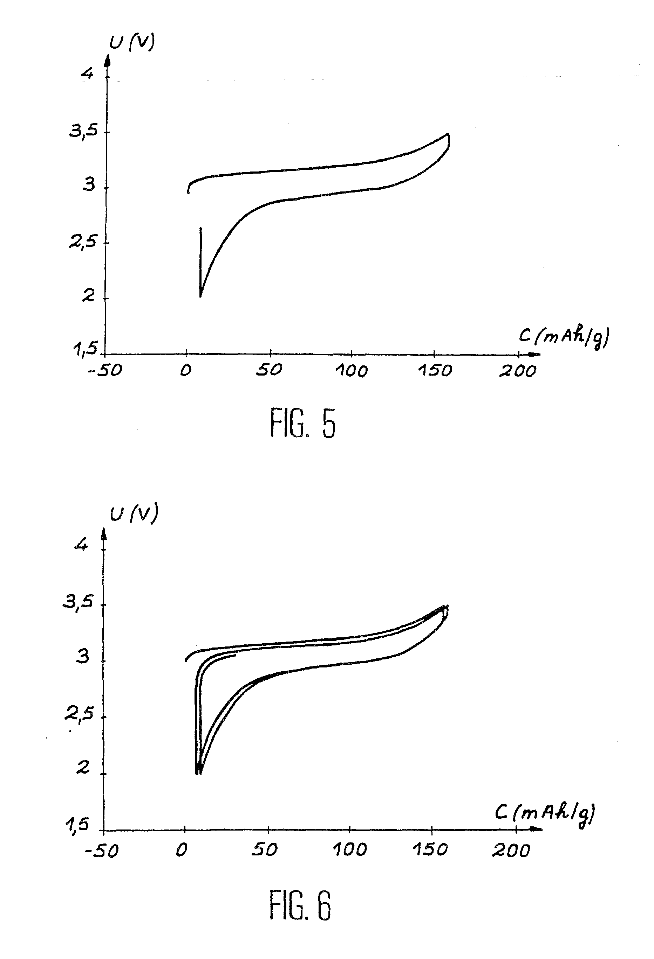

Le comportement d'un accumulateur réalisé de manière identique à celle décrite dans l'exemple 1 et contenant 6,6 mg de produit lithié dans l'électrode positive, chargé et déchargé sous 0,092 mA est montré par les figures n°5 et 6 (premier cycle charge-décharge - figure 5 ; 3 premiers cycles-figure 6).

Exemple 3 : Lithiation du composé initial de formulation proche de LiMn₂O₄ et de structure spinelle pour un degré d'oxydation voisin de +3,58, déterminé par dosage et qui est un matériau adapté à une utilisation 4V en accumulateur Li-ion.

Cet exemple illustre le procédé de l'invention dans le cas où les trois premières étapes du procédé sont réalisées de manière simultanée.

Le produit a été lithié par le procédé de l'invention de la manière suivante : 745 ml de pentanol-1 sont introduits dans un ballon à 3 cols de contenance 2 000 ml. Dans ce ballon équipé d'un condenseur et dont l'intérieur est isolé de l'atmosphère ambiante, on fait buller pendant 30 minutes et à une température voisine de 20°C de l'argon dans l'alcool soumis à une légère agitation.

0,52 g (soit 0,075 moles) de lithium métallique sous forme de grenaille et 13,38 g de LiMn₂O₄ (soit 0,145 moles) préalablement séché sont introduits conjointement dans l'alcool. Le contenu du réacteur est alors chauffé sous agitation à l'aide d'un chauffe-ballon. A une température voisine de 110°C, le lithium se dissout rapidement et intégralement, ce qui a pour effet d'amener l'ensemble de l'alcool contenu dans le ballon à l'ébullition soit une température voisine de 139°C. Par la suite, l'ébullition est maintenue par chauffage pendant 16 heures.

La dispersion une fois refroidie est centrifugée sous atmosphère sèche de manière à séparer la poudre de la phase liquide. La poudre d'oxyde est rincée deux fois dans de l'hexane, puis séchée à température ambiante.

Le produit lithié final contient alors du manganèse à un degré d'oxydation moyen voisin de +3,08 traduisant l'insertion de 0,50 mole de lithium par mole de manganèse avec un rapport Li :Mn voisin de 1,04.

Une électrode positive de diamètre 12 mm et d'épaisseur voisine de 250 microns intégrant le composé lithié préparé ci-dessus est obtenu en mettant en oeuvre un mélange intime de 80% en masse d'oxyde lithié. 7,5% en masse de graphite, 77,5% en masse de noir de carbone et 5% en masse de liant PTFE sur une grille d'aluminium. Cette électrode est ensuite séchée à 150°C sous vide primaire pendant une nuit.

Un accumulateur ou une cellule électrochimique à électrode de lithium métallique est réalisé en pile bouton CR2032. L'électrolyte est une solution molaire d'hexafluorophosphate de lithium (LiPF6) dans un mélange fait de 33% en poids de carbonate d'éthylène (EC) et de 67% en poids de dimethoxyéthane (DME) (par exemple électrolyte LP32 de chez Merck). Un séparateur de polypropylène microporeux type Celgard (Hoechst) est utilisé entre les deux électrodes.

Le comportement d'un tel accumulateur contenant 62,25 mg de produit prélithié dans l'électrode positive, chargé sous 0,4175 mA et déchargé sous 0,835 mA est montré par la figure 7.

## Revendications

1. Oxyde de métal de transition lithié ou surlithié susceptible d'être obtenu par un procédé comprenant les trois étapes suivantes, réalisées successivement ou de manière simultanée :
- préparation d'une solution d'alkoxyde de lithium par dissolution de lithium métallique dans l'alcool correspondant, ledit alcool étant choisi parmi les alcools issus des alcanes linéaires ou ramifiés comprenant au moins 3 atomes de carbone, les alcools issus des hydrocarbures aliphatiques insaturés, et leurs mélanges ;
- addition d'une poudre d'oxyde de métal de transition à ladite solution d'alkoxyde de lithium pour obtenir une dispersion ;
- réduction ménagée dudit oxyde de métal de transition par ledit alkoxyde de lithium jusqu'à obtention d'un oxyde de métal de transition lithié ou surlithié présentant une stoechiométrie définie Li : Métal ;
ledit procédé comprenant ensuite, en outre, les étapes suivantes :
- évaporation de l'alcool résiduel ;
- rinçage de la poudre ainsi obtenue ;
- séchage de la poudre.

2. Oxyde selon la revendication 1, dans lequel la réduction ménagée est réalisée à la pression atmosphérique et àune température de 50 à 260°C.

3. Oxyde selon la revendication 1, dans lequel la réduction ménagée est réalisée à une pression inférieure à la pression atmosphérique.

4. Oxyde selon l'une quelconque des revendication 1 à 3, dans lequel ledit alcool est choisi parmi les alcools issus des alcanes linéaires ou ramifiés de 3 à 10 atomes de carbone, et leurs mélanges.

5. Oxyde selon la revendication 4, dans lequel ledit alcool est le pentanol-1 ou l'isopropanol.

6. Oxyde selon l'une quelconque des revendications 1 à 5, dans lequel la solution d'alkoxyde de lithium est préparée par addition de lithium métal dans l'alcool à température ambiante et sous atmosphère de gaz inerte.

7. Oxyde selon la revendication 6, dans lequel l'alcool se trouve en excès par rapport au lithium.

8. Oxyde selon la revendication 1, dans lequel ledit oxyde de métal de transition est choisi parmi les oxydes de métaux de transition, et les oxydes mixtes de métaux de transition avec un autre métal.

9. Oxyde selon la revendication 8, dans lequel le dit métal de transition est choisi parmi V, Mn, Co, Ni, Ti.

10. Oxyde selon l'une quelconque des revendications 1 à 9, dans lequel lors de l'étape d'addition de poudre d'oxyde de métal de transition à la solution d'alkoxyde de lithium, l'alkoxyde est en léger excès par rapport à l'alcool correspondant.

11. Oxyde selon l'une quelconque des revendications 1 à 9, dans lequel la réduction ménagée est réalisée en chauffant jusqu'au reflux à pression atmosphérique ou à une pression inférieure à la pression atmosphérique la dispersion obtenue lors de l'étape précédente puis en la maintenant au reflux à la température de réaction, sous agitation et sous atmosphère inerte.

12. Oxyde selon l'une quelconque des revendications 1 à 11, dans lequel le procédé comprend en outre une étape supplémentaire de traitement thermique après le séchage.

13. Oxyde selon la revendication 12 dans lequel le traitement thermique est réalisé à une température de 150 à 800°C et pendant une durée de 30 minutes à 3 heures.

14. Oxyde de métal de transition lithié ou surlithié selon l'une quelconque des revendications 1 à 11, présentant une stoechiométrie Li : Métal supérieure ou égale à 0,5, stable, et réversible vis-à-vis de l'insertion et de la désinsertion du lithium.

15. Oxyde de métal de transition lithié ou surlithié selon la revendication 14, dans lequel ladite stoechiométrie Li : Métal est de 0,5 à 2.

16. Utilisation de l'oxyde de métal de transition lithié ou surlithié selon l'une quelconque des revendications 1 à 15 en tant que matériau actif d'électrode.

17. Electrode comprenant en tant que matériau actif avant qu'elle n'ait subi une quelconque opération de charge ou de décharge l'oxyde de métal de transition lithié ou surlithié selon l'une quelconque des revendications 1 à 15.

18. Electrode selon la revendication 17 qui est une électrode positive.

19. Accumulateur comprenant une électrode selon l'une quelconque des revendication 17 à 18.

20. Accumulateur comprenant une électrode positive selon la revendication 18 et une électrode négative composite.

21. Accumulateur comprenant une électrode positive selon la revendication 18 et une électrode négative en lithium métallique ou en alliage de lithium.
